**Europäisches Patentamt**

**European Patent Office**

**Office européen des brevets**

(19)

(11) Veröffentlichungsnummer: **0 258 822**
**B1**

(12) **EUROPÄISCHE PATENTSCHRIFT**

(45) Veröffentlichungstag der Patentschrift:
**14.11.90**

(51) Int. Cl.⁵: **B60C 9/22**, B60C 9/18

(21) Anmeldenummer: **87112461.6**

(22) Anmeldetag: **27.08.87**

(54) **Fahrzeugluftreifen.**

(30) Priorität: **03.09.86  DE 3629955**

(43) Veröffentlichungstag der Anmeldung:
**09.03.88 Patentblatt 88/10**

(45) · Bekanntmachung des Hinweises auf die Patenterteilung:
**14.11.90 Patentblatt 90/46**

(84) Benannte Vertragsstaaten:
**AT BE CH DE ES FR GB GR IT LI LU NL SE**

(56) Entgegenhaltungen:
**FR-A- 2 285 255**
**US-A- 1 894 237**
**US-A- 2 958 359**
**US-A- 3 991 803**
**US-A- 4 484 965**

(73) Patentinhaber: **Continental AG, Königsworther Platz 1 Postfach 1 69, D-3000 Hannover 1(DE)**

(72) Erfinder: **Günter, Johannes, Gerhard-Hauptmann-Strasse 16, D-3008 Garbsen-Frielingen(DE)**

ACTORUM AG

## Beschreibung

Die Erfindung betrifft einen Fahrzeugluftreifen mit zumindest im wesentlichen in Reifenumfangsrichtung verlaufenden Verstärkungseinlagen in Form von Streifen gemäß dem Oberbegriff des Anspruchs 1.

Streifenförmige Verstärkungseinlagen, z.B. aus Fadenscharen bestehend, sind bekannt. Sie können in Reifenumfangsrichtung verlaufend nebeneinanderliegend angeordnet sein. Ferner ist es bekannt, diese Streifen so aufzubringen, daß sie sich teilweise überdecken, also eine schindelartige Anordnung aufweisen. Die FR-A 2 285 255 zeigt z.B. einen derartigen gattungsgemäßen Reifen. Ferner zeigt US-A 3 991 803 einen Reifen mit Verstärkungseinlagen mit variabler Überlappung.

Der Erfindung im wesentlichen die Aufgabe zugrunde, die eingangs erwähnten Luftreifen durch eine besondere Anordnung der erwähnten Streifen so auszuführen, daß sie besonders gute Hochgeschwindigkeitseigenschaften des Luftreifens gewährleisten.

Um dieses Ziel zu erreichen, sind erfindungsgemäß die Streifen im Bereich der beiden Ränder eines darunter befindlichem Gürtels schindelartig geschachtelt. Werden diese Streifen bei der Reifenherstellung aufgespult, also über die Breite des Laufstreifens in fortlaufenden Windungen verlegt, so ist eine besonders einfache Herstellung des Reifens möglich. Im Bereich der Gürtelränder wird der Vorschub beim Aufspulen verringert; in der Laufflächenmitte ist der Vorschub entsprechend größer, um dort Windungen mit größerem, gegenseitigem Abstand erreichen zu können.

Durch die schindelartige Überdeckung der Streifen im Bereich der beiden Gürtelränder wird eine wünschenswerte Verstärkung der Reifenzenitpartie erreicht. In der Laufstreifenmittelzone hingegen tritt eine wesentlich geringere Beeinflussung ein. Die Verstärkung ist dort infolge der dort in geringer Anzahl vorhandenen Streifen entsprechend kleiner.

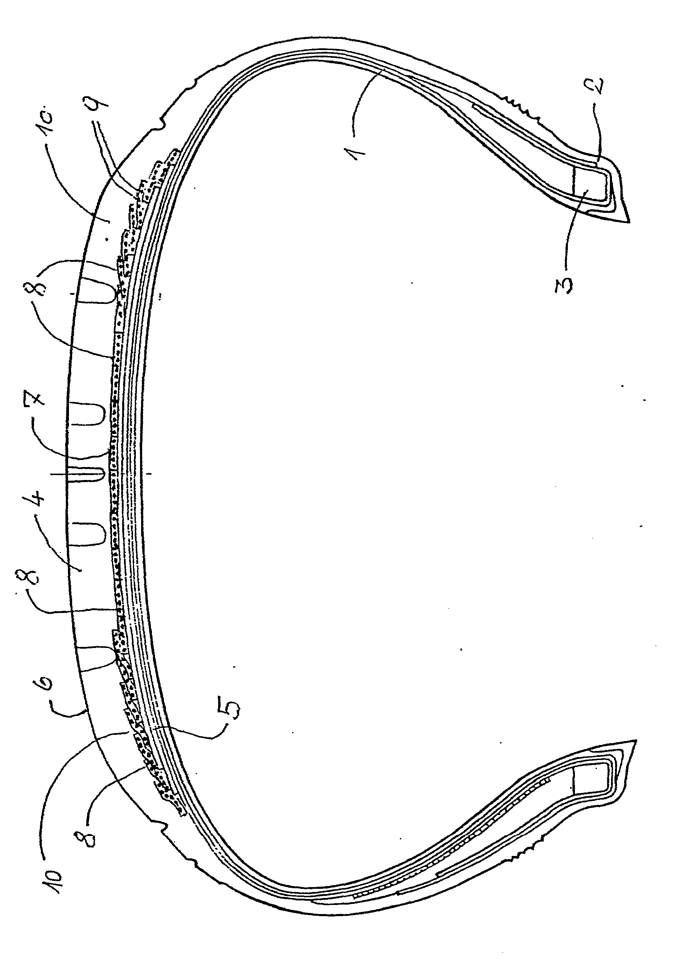

In der Zeichnung ist ein Ausführungsbeispiel der Erfindung dargestellt.

Die Abb. zeigt einen radialen Teilschnitt durch einen Hochgeschwindigkeitsfahrzeugluftreifen für ein Personenfahrzeug.

Der vorwiegend aus Gummi bestehende Körper des Luftreifens ist durch eine Radialkarkasse 1 verstärkt, die in den Wülsten 2 an den dort befindlichen Wulstkernen 3 verankert ist. Unterhalb des Laufstreifens 4 des Luftreifens in der Reifenzenitpartie liegt auf der Karkasse 1 ein zweilagiger, in Reifenumfangsrichtung zugfester Gürtel 5 auf, der sich praktisch über die Breite der Lauffläche 6 erstreckt. Der Gürtel 5 ist seinerseits überdeckt von einer bandagenartigen Verstärkungseinlage 7, die aus einem aufgespulten Streifen 8 besteht. Der Streifen 8 besteht seinerseits aus z.B. vier bis sechs einander parallelen, in Streifenlängsrichtung verlaufenden, gummierten Seilen oder Fäden 9, so daß die Streifen 8 eine Breite von etwa 8 bis 20 mm erhalten.

Wichtig ist nun, daß das Aufspulen der Streifen 8 so vollzogen wird, daß sich die aufeinanderfolgenden Windungen der Streifen 8 im Bereich der Reifenschultern 10 überlappen, während die Streifen 8 etwa auf die halbe Breite des Laufstreifens 4 in dessen Mittelzone zur Bildung einer glatten durchgehenden Schicht dicht bei dicht verlegt sind.

Demgemäß erhalten die Reifenschultern 10 praktisch die doppelte Anzahl der Fäden 9. Dies führt dann zu der gewünschten Schulterverstärkung des Fahrzeugluftreifens.

Es sei noch erwähnt, daß die Streifen 8 in der Laufflächenmitte auch mit gegenseitigem Abstand angeordnet sein können. Damit kann die gewünschte Beeinflussung der Laufstreifenzone durch einen aufgespulten Streifen 8 im Sinne der Erfindung noch verbessert werden.

Im Bereich der Reifenschultern wird die schindelartige Verlegung der Streifen 8 so vollzogen, daß die Streifen dort die Ränder des Gürtels 5 völlig überdecken, also auch solche Bereiche im Bereich der Reifenschultern 10 ausfüllen, die neben den Rändern des Gürtels 5 liegen. Dort kann der Streifen 8 - wie aus der Zeichnung ersichtlich - auch die Karkasse 1 berühren.

## Patentansprüche

1. Fahrzeugluftreifen mit im wesentlichen in Reifenumfangsrichtung verlaufenden Verstärkungseinlagen in der Zenitpartie in Form von z.B. aus Fadenscharen bestehenden, in Windungen verlegten Streifen (8), die im Bereich der Laufflächenmitte dicht bei dicht oder mit geringem Abstand nebeneinander etwa in einer Ebene liegend angeordnet sind, dadurch gekennzeichnet, daß sie im Bereich der beiden Ränder eines darunter befindlichen Gürtels (5) schindelartig geschachtelt sind.

2. Reifen nach Anspruch 1, dadurch gekennzeichnet, daß die Breite der beiden schindelartig ausgeführten Abschnitte etwa 1/4 der Laufstreifenbreite beträgt.

3. Reifen nach Anspruch 1, dadurch gekennzeichnet, daß der schindelartig ausgeführte Abschnitt die Ränder des in Umfangsrichtung zugfesten Gürtels (5) überragt.

4. Reifen nach Anspruch 1, dadurch gekennzeichnet, daß die Breite der Streifen (8) etwa 8 bis 20 mm beträgt.

5. Reifen nach Anspruch 1, dadurch gekennzeichnet, daß sich die Streifen im schindelartig ausgeführten Abschnitt je etwa zu Hälfte gegenseitig überdecken.

## Claims

1. Pneumatic vehicle tyre, comprising reinforcing members in the crown portion, which extend substantially in the circumferential direction of the tyre in the form of strips (8), for example, which are formed from filament bands and are wound into coils, said strips being disposed in the region of the centre of the tread surface so as to lie close up to one another or with a small spacing therebetween substantially in one plane, characterised in that the strips are stacked in a shingle-like manner in the region of the two edges of a belt (5) situated therebeneath.

2. Tyre according to claim 1, characterised in that the width of the two shingle-like portions is approximately 1/4 of the width of the tread strip.

3. Tyre according to claim 1, characterised in that the shingle-like portion protrudes beyond the edges of the belt (5), which is substantially inextensible in the circumferential direction.

4. Tyre according to claim 1, characterised in that the width of the strips (8) is approximately 8 to 20 mm.

5. Tyre according to claim 1, characterised in that up to approximately half of the area of the strips in the shingle-like portion is overlapped.

**Revendications**

1. Pneumatique pour véhicules comprenant des insertions de renforcement qui s'étendent sensiblement dans la direction circonférentielle du pneumatique dans la partie zénithale ou de couronne, présentées sous la forme de bandes (8), composées de nappes de fils, posées en spires d'enroulement, et qui, dans la région du milieu de la bande de roulement, sont disposées les unes à côté des autres, sensiblement dans un même plan, soit jointives, soit avec un faible écartement mutuel, caractérisé en ce que, dans la région des deux bords de la ceinture (5) sous-jacente, ces insertions sont imbriquées à clin.

2. Pneumatique selon la revendication 1, caractérisé en ce que la largeur des deux segments réalisés à clin représente à peu près 1/4 de la largeur de la bande de roulement.

3. Pneumatique selon la revendication 1, caractérisé en ce que le segment réalisé à clin recouvre les bords de la ceinture (5) résistante à la traction dans la direction circonférentielle.

4. Pneumatique selon la revendication 1, caractérisé en ce que la largeur des bandes (8) représente environ 8 à 20 mm.

5. Pneumatique selon la revendication 1, caractérisé en ce que, dans le segment posé à clin, les bandes se recouvrent mutuellement à peu près sur la moitié de leur largeur.

EP 0 258 822 B1